# EUROPÄISCHE PATENTSCHRIFT

(11) **EP 2 321 213 B1**
(45) Veröffentlichungstag und Bekanntmachung des Hinweises auf die Patenterteilung: **18.01.2012**
(21) Anmeldenummer: 09782142.5
(22) Anmeldetag: 25.08.2009
(51) Int. Cl.: B66C 19/00, B65G 63/00

(54) **BRÜCKEN- ODER PORTALKRAN, INSBESONDERE ZUM HANDHABEN VON ISO-CONTAINERN**
BRIDGE OR GANTRY CRANE, IN PARTICULAR FOR HANDLING ISO CONTAINERS
PONT-GRUE OU GRUE À PORTIQUE, EN PARTICULIER POUR LA MANUTENTION DE CONTENEURS ISO

(30) Priorität: 06.09.2008 DE 102008046154
(43) Veröffentlichungstag der Anmeldung: 18.05.2011
(73) Patentinhaber: Gottwald Port Technology GmbH, 40597 Düsseldorf (DE)
(72) Erfinder: FRANZEN, Hermann, 41238 Mönchengladbach (DE); WIESCHEMANN, Armin, 46119 Oberhausen (DE)
(74) Vertreter: Moser, Jörg Michael
(86) Internationale Anmeldenummer: PCT/EP2009/060905
(87) Internationale Veröffentlichungsnummer: WO 2010/026076

(56) Entgegenhaltungen:
- EP-A2- 1 939 131
- WO-A2-01/62656
- DE-A1- 2 352 176
- DE-A1- 19 700 469
- US-A- 5 718 550

## Beschreibung

Die Erfindung betrifft einen Brücken- oder Portalkran, insbesondere zum Handhaben von ISO-Containern, mit einer entlang eines Kranträgers in Katzfahrtrichtung bewegbaren Krankatze, die mindestens einen Mast trägt, der in einer vertikalen Hub-und Senkrichtung bewegbar ist und an dem ein Lastaufnahmemittel für Container aufgehängt ist.

Aus dem europäischen Patent EP 1 365 984 B1 ist ein Brücken- oder Portalkran zum Stapeln von Containern, insbesondere von ISO-Containern, bekannt, der innerhalb eines Container-Terminals Container in einen Lagerbereich ein- und oder aus diesem auslagert. In dem Lagerbereich werden die Container auf einen rechteckförmigen Lagerboden in Zeilen und Spalten abgestellt und hierbei bis zu vier Container auf einander gestapelt. In dem Lagerbereich sind die abgestellten Container mit ihrer Längserstreckung zur Längsrichtung des Lagerbereichs ausgerichtet und beispielsweise sind zehn Container mit geringem Abstand zueinander und der Breite des Lagerbereichs nach nebeneinander abgestellt. Der Brücken- oder Portalkran weist einen im Wesentlichen den quaderförmigen Lagerbereich der Breite nach überspannenden Kranträger auf, auf dem und entlang dessen Längsrichtung eine Krankatze verfahrbar ist. Bei einer Ausbildung des Brücken- oder Portalkrans als Brückenkran weist der Kranträger an seinen gegenüberliegenden Enden jeweils mindestens ein Fahrwerk auf, über die der Kranträger entlang von Schienen verfahrbar ist. Entsprechend der Bauweise eines Brückenkrans sind die Schienen hierzu über vertikale Stützen aufgeständert, die seitlich neben dem Lagerbereich angeordnet und im Boden verankert sind. Über die Fahrwerke des Kranträgers ist somit der Brückenkran in Längsrichtung des Lagerbereichs verfahrbar und über die auf dem Kranträger verfahrbare Krankatze quer zu diesem. Wenn der Brücken- oder Portalkran als Portalkran ausgebildet ist, sind die Schienen für den Kranträger auf dem Boden seitlich angrenzend zu dem Lagerbereich angeordnet und die Fahrwerke des Kranträgers über vertikale Stützen mit den Enden des Kranträgers verbunden.

Um mittels der Krankatze die Container handhaben zu können, ist an der Krankatze ein Mast vorgesehen, der in Vertikalrichtung geführt und heb- oder senkbar ist. Der

Mast ist als Kastenträger ausgebildet und für die Hub- und Senkbewegung des Mastes sind auf der Krankatze Hubwerke angeordnet. An dem unteren und in Richtung der zu handhabenden Container weisenden Ende des Mastes ist ein Lastaufnahmemittel für Container, insbesondere ein sogenannter Spreader, aufgehängt. Die Verwendung eines starren Mastes zwischen der Krankatze und dem Lastaufnahmemittel bringt den Vorteil, dass eine pendelarme Handhabung der Container im Gegensatz zu auch verwendeten an Seilen aufgehängten Lastaufnahmemitteln möglich ist.

Auch ist bereits aus der europäischen Patentanmeldung EP 1 939 131 A2 bereits eine Containerbrücke mit einer Krankatze bekannt, die Katzfahrtrichtung gesehen hintereinander zwei Seilwindwerke aufweist, an denen ein Twin-Lastaufnahmemittel für zwei ISO-Container über Hubseile aufgehängt sind. Die einzelnen Lastaufnahmemittel sind jedoch über im Wesentlichen horizontal und in Katzfahrtrichtung ausgerichtete Hydraulikzylinder miteinander verbunden, um den Abstand zwischen den einzelnen Lastaufnahmemitteln ein- bzw. verstellen zu können. Entsprechender Weise können die Lastaufnahmemittel nicht unabhängig voneinander in Hub- und Lenkrichtung bewegt werden.

Des Weiteren offenbart die Patentschrift US 5 718 550 A einen Portalkran zum Umschlag von Containern, der in üblicher Weise einen horizontalen Kranträger aufweist, der eine erste Krankatze und in Katzfahrrichtung gesehen davor beziehungsweise dahinter eine zweite Krankatze trägt. Jeder der beiden Krankatzen weist ein Hubwerk auf, an dem über Seile ein Spreaderrahmen zum Aufnehmen der umzuschlagenden Container befestigt ist. Diese Spreaderrahmen sind derart ausgebildet, dass diese gleichzeitig zwei beziehungsweise drei Container transportieren können, um somit die Umschlagleistung zu erhöhen. Die erste Krankatze und die zweite Krankatze tragen somit jeweils nur ein einziges Lastaufnahmemittel, das über Seile an ein einzelnes Hubwerk aufgehängt ist, und sind unabhängig voneinander entlang des Kranträgers verfahrbar.

Der vorliegenden Erfindung liegt die Aufgabe zugrunde, die Umschlagleistung eines Brücken- oder Portalkrans zu optimieren.

Diese Aufgabe wird durch einen Brücken- oder Portalkran mit den Merkmalen des Anspruchs 1 gelöst. Vorteilhafte Ausgestaltungen der Erfindung sind in den Ansprüchen 2 bis 7 angegeben.

Erfindungsgemäß wird bei einem Brücken- oder Portalkran, insbesondere zum Handhaben von ISO-Containern, mit einer entlang eines Kranträgers in Katzfahrtrichtung bewegbaren Krankatze, die mindestens einen Mast trägt, der in einer vertikalen Hub- und Senkrichtung bewegbar ist und an dem ein Lastaufnahmemittel für Container aufgehängt ist, eine Optimierung der Umschlagleistung dadurch erreicht, dass in Katzfahrtrichtung gesehen mit Abstand und hinter einem ersten Mast mindestens ein zweiter Mast mit einem zweiten Lastaufnahmemittel angeordnet ist. Somit können mit einer Fahrbewegung der Krankatze entlang des Kranträgers zwei Container transportiert werden. Vorteilhaft ist eine gemeinsame Krankatze vorgesehen.

Vorteilhafter Weise ist vorgesehen, dass der erste Mast und der mindestens eine zweite Mast derart voneinander beabstandet sind, dass von dem an dem ersten Mast angeordneten ersten Lastaufnahmemittel und von dem an dem mindestens einem zweiten Mast angeordneten zweiten Lastaufnahmemittel in Bezug auf die Bewegung in Hub- und Senkrichtung unabhängig voneinander jeweils Container handhabbar sind. Hierdurch können die Container zeitlich synchron oder nacheinander gehandhabt werden oder einer der beiden Maste in einem angehobenen Ruhezustand verbleiben. Auch sind Fahrbewegungen der Krankatze zum Ausrichten der Lastaufnahmemittel in Bezug auf die Container zwischen den einzelnen Handhabungsvorgängen möglich.

In konstruktiver Hinsicht ist vorgesehen, dass der erste Mast über ein erstes Hubwerk und der mindestens eine zweite Mast über ein zweites Hubwerk heb- und senkbar sind. Auch ist vorgesehen, dass der erste und zweite Mast über erste obere und untere Führungselemente beziehungsweise über zweite obere und untere Führungselemente an der Krankatze geführt sind.

Außerdem ist vorteilhaft, dass der Kranträger aus einem ersten Träger und einem zweiten Träger besteht, an denen Katzschienen angeordnet sind, auf denen die Krankatze in Katzfahrtrichtung verfahrbar ist und der erste Träger und der zweite Träger in der rechtwinklig zu der Katzfahrtrichtung verlaufenden Kranfahrtrichtung voneinander beabstandet ist.

In bevorzugter Ausgestaltung sind an einer gemeinsamen Krankatze ein erster Mast und ein zweiter Mast angeordnet. Die Anzahl von zwei Masten erlaubt eine Erhöhung der Umschlagleistung und führt hierbei gleichzeitig nur zu einer geringen Erhöhung der Baubreite des Brücken- und Portalkrans in Längsrichtung des Containerlagers gesehen.

Um ein seitliches Pendeln der Container wirksam zu minimieren bzw. verhindern, sind der erste Mast und der zweite Mast jeweils einteilig und starr ausgebildet. Ein teleskopierbarer Mast gilt im Sinne dieser Definition nicht als einteilig, da mehrere Teleskopschüsse vorhanden sind.

Ein Ausführungsbeispiel der Erfindung ist in der Zeichnung dargestellt und wird nachfolgend beschrieben. Es zeigen:
Figur 1 einen Übersichtsplan einer Umschlaganlage für ISO-Container in einem Hafenbereich,
Figur 2 eine Ausschnittsvergrößerung von Figur 1 aus dem Bereich eines Be- und Entladebereichs eines Containerlagers der Umschlaganlage gemäß Figur 1,
Figur 3 eine perspektivische Ansicht eines erfindungsgemäßen Brücken- oder Portalkrans gemäß Figur 2 in Ausgestaltung als Portalkran,
Figur 4 eine Seitenansicht von Figur 3,
Figur 5 eine Vorderansicht von Figur 3 mit einem benachbarten weiteren Brücken-oder Portalkran,
Figur 6 eine Vorderansicht von Figur 3 mit einem Brücken- oder Portalkran mit einem Kranträger in alternativer Länge.
Figur 7 eine Ausschnittsvergrößerung von Figur 1 aus dem Bereich eines Ein- und Auslagerungsbereichs eines Containerlagers der Umschlaganlage gemäß Figur 1 und
Figur 8 eine Schnittansicht eines Brücken- oder Portalkrans gemäß Figur 5 aus dem Bereich der Krankatze.

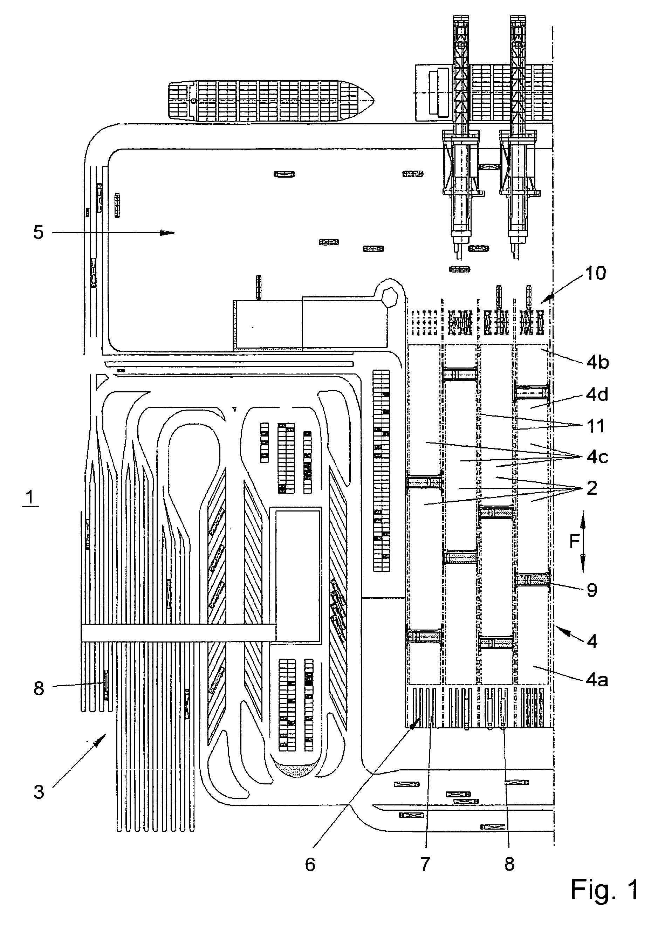

Die Figur 1 zeigt einen Übersichtsplan einer Umschlagsanlage 1 in einem Hafenbereich, in dem Container 2, insbesondere ISO-Container, umgeschlagen werden. Der Übersichtsplan zeigt nur einen Ausschnitt der Umschlaganlage 1, lässt jedoch deren wesentliche Bestandteile erkennen. Die Umschlaganlage 1 besteht aus einem landseitigen Umschlagbereich 3, einem Containerlager 4 und einem seeseitigen Umschlagbereich 5.

Der landseitige Umschlagbereich 3 grenzt an ein landseitiges Ende 4a des Containerlagers 4 an und weist einen sich hieran anschließenden Be- und Entladungsbereich 6 mit einer Vielzahl von nebeneinander angeordneten Stellplätzen 7 für zu be- und entladende Lastkraftwagen 8 auf. In dem Be- und Entladebereich 6 wird ein auf einem der Stellplätze 7 abgestellter Lastkraftwagen 8 von einem in dem Containerlager 4 arbeitenden Brücken- oder Portalkran 9 be- bzw. entladen.

Das Containerlager 4 besteht aus einer Vielzahl von parallel nebeneinander und zeilenartig angeordneten Containerlagerbereichen 4c, denen jeweils an ihrem landseitigen Ende 4a ein Be- und Entladebereich 6 und an ihrem seeseitigen Ende 4b ein Ein- und Auslagerungsbereich 10 zugeordnet ist. Jedem Containerlagerbereich 4c sind ein oder mehrere Brücken- oder Portalkrane 9 zugeordnet, die entlang der Containerlagerbereiche 4c in Kranfahrtrichtung F auf Schienen 11 verfahrbar sind. Von dem Brücken- oder Portalkran 9 werden die Container 2 zwischen dem Containerlagerbereich 4c und dem Be- und Entladebereich 6 bzw. dem Ein- und Auslagerungsbereich 10 transportiert. Jeder Containerlagerbereich 4c weist neben dem einen oder mehreren Brücken- oder Portalkranen 9 auch einen Abstellbereich 4d für die Container 2 auf. Der Abstellbereich 4d hat eine rechteckige Grundfläche, auf dem die Container 2 in Spalten und Zeilen angeordnet sind. Hierbei werden bis zu fünf Container 2 aufeinander gestapelt gelagert. Die abgestellten Container 2 sind mit ihrer Längserstreckung im Wesentlichen parallel zu den Schienen 11 und somit in Kranfahrtrichtung F der Brücken- oder Portalkrane 9 ausgerichtet. Diese Ausrichtung der Container 2 ist auch im Be- und Entladebereich 6 mit den an- und abfahrenden Lastkraftwagen 7 und im dem Ein- und Auslagerungsbereich 10 wieder zu finden, so dass die Brücken- oder Portalkrane 9 jeweils neben etwaig erforderlichen Ausrichtungskorrekturen die Container 2 bei der Aufnahme und Abgabe nicht verschwenken müssen.

An dem seeseitigen Ende 4b des Containerlagers 4 werden die Container 2 von dem Brücken- oder Portalkran 9 in dem Ein- und Auslagerungsbereich 10 abgestellt oder von dort aufgenommen. Der Ein- und Auslagerungsbereich 10 dient als Schnittstelle zu dem seeseitigen Umschlagbereich 5.

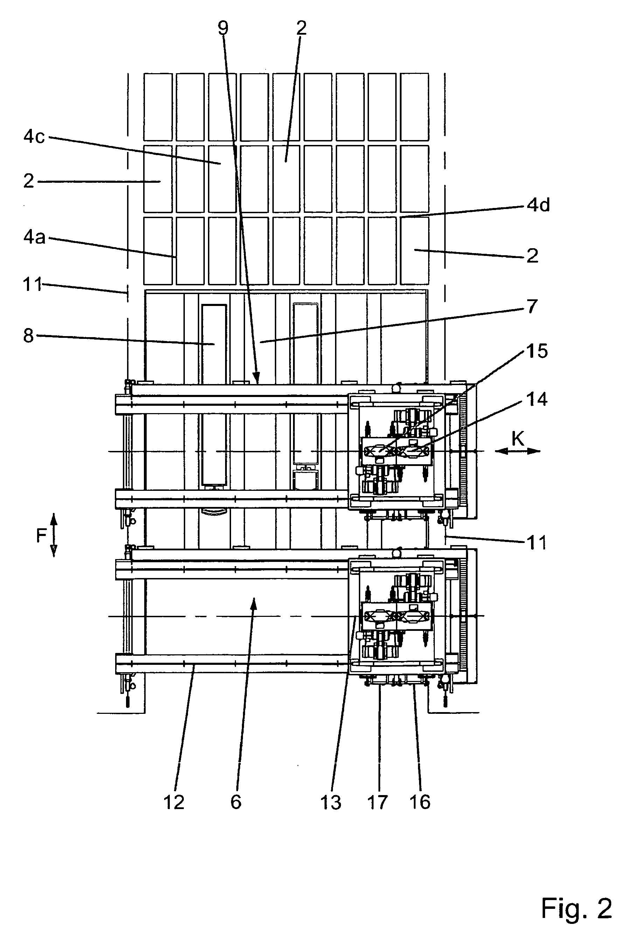

Die Figur 2 zeigt eine Ausschnittsvergrößerung von der Figur 1 aus dem Bereich Beund Entladebereichs 6 und einem Teil eines angrenzenden Containerlagerbereichs 4c. Es ist ersichtlich, dass in jedem Be- und Entladebereich 6 mehrere Stellplätze 7 für Lastkraftwagen 8 nebeneinander und mit möglichst geringem Abstand zueinander angeordnet sind. Bei einem Lagerbereich 4c mit neun nebeneinander abgestellten Reihen von Containern 2 sind sechs Stellplätze 7 nebeneinander für Lastkraftwagen 8 vorgesehen.

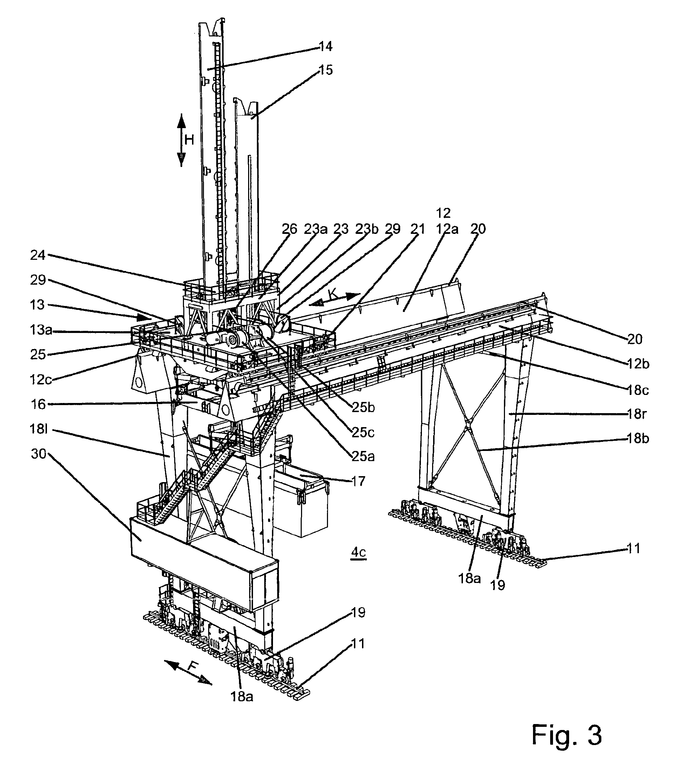

Des Weiteren ist aus der Figur 2 der nähere Aufbau des Brücken- oder Portalkranes 9 an sich ersichtlich. Dieser Brücken- oder Portalkran 9 besteht im Wesentlichen aus einem entlang der seitlich neben den Abstellbereichen 4d des jeweiligen Containerlagerbereiches 4c angeordneten Schienen 11 in Kranfahrtrichtung F verfahrbahren Kranträger 12, auf dem quer zur Fahrtrichtung F des Kranträgers 12 eine Krankatze 13 in Katzfahrtrichtung K verfahrbar ist. An der Krankatze 13 sind in Katzfahrtrichtung K gesehen hintereinander und mit Abstand zueinander ein erster Mast 14 und ein zweiter Mast 15 angeordnet. Der erste und der zweite Mast 14, 15 sind somit an einer gemeinsamen Krankatze 13 aufgehängt und werden somit gemeinsam von der Krankatze 13 entlang des Kranträgers 12 bewegt. Jeder der beiden Masten 14, 15 ist vertikal und relativ zu der Krankatze 13 heb- und senkbar, um mittels an deren unteren Endes 14a, 15a (siehe Figur 3) befestigte Lastaufnahmemittel 16, 17, vorzugsweise einen Spreaderrahmen, Container 2 aufzunehmen und abzugeben. Der erste und der zweite Mast 14, 15 sind als starre einteilige Ausleger, vorzugsweise in Form von Kastenträgern, ausgebildet, über die die Lastaufnahmemittel 16, 17 relativ zu der Krankatze 13 geführt sind. Hierdurch werden seitliche, d.h. horizontale Pendelbewegungen der Lastaufnahmemittel 16, 17 mit oder ohne Container 2 minimiert oder verhindert. Der erste und zweite Mast 14, 15 sind nicht telekopierbar, da die seitliche Stabilität durch die zusätzlichen Führungen zwischen den dann vorhandenen einzelnen Teleskopschüssen leiden würde.

In der Figur 3 ist eine perspektivische Ansicht eines erfindungsgemäßen Brücken-oder Portalkrans 9 in Ausgestaltung als Portalkran dargestellt. Aus Gründen der Übersichtlichkeit ist der Containerlagerbereich 4c leer dargestellt. Der Portalkran 9 weist einen Kranträger 12 auf, dessen gegenüberliegende Enden über in Kranfahrtrichtung F gesehen rechte und linke vertikale Stützen 18l und 18r abgestützt sind. Insgesamt ist der Portalkran in Kranfahrtrichtung F gesehen u-förmig und nach unten offen. Die vertikalen Stützen 18l und 18r nehmen an ihren oberen Enden den Kranträger 12 in dessen gegenüberliegenden Endbereichen auf und sind an ihren unteren Enden über Kranfahrwerke 19 auf den Schienen 11 in Kranfahrtrichtung F verfahrbar. Des weiteren ist der Kranträger 12 als Doppelträger mit einem ersten Träger 12a und einem zweiten Träger 12b ausgebildet, die in Kranfahrtrichtung F gesehen auf einem Höhenniveau und mit Abstand hintereinander angeordnet sind. Entsprechender Weise sind auch die linke vertikale Stütze 18l und die rechte vertikale Stütze 18r in Kranfahrtrichtung F gesehen als Doppelstützen ausgebildet, die im Bereich ihres unteren Endes u-förmig über einen Grundträger 18a miteinander verbunden sind. Die somit insgesamt u-förmigen vertikalen Stützen 18l und 18r und der Grundträger 18a, sind zusätzlich über stangenförmige Hauptspannelemente 18b ausgesteift. Die Hauptspannelemente 18b sind kreuzförmig angeordnet und jeweils im Bereich des oberen und unteren Endes an den linken vertikalen Stützen 18l beziehungsweise den rechten Stützen 18r angeordnet. Zusätzlich ist oberhalb der kreuzförmigen Hauptspannelemente 18b ein parallel zu dem Grundträger 18a und somit im Wesentlichen horizontal verlaufendes oberes Spannelement 18c vorgesehen.

Auch zeigt die Figur 3, dass der erste Träger 12a und der zweite Träger 12b jeweils einen dreieckförmigen Querschnitt aufweisen. Dieser dreieckförmige Querschnitt hat die Form eines gleichschenkligen Dreiecks, wobei der Winkel im Bereich der Spitze etwa 30° beträgt. Im Bereich der Spitze 12c des ersten Trägers 12a und des zweiten Trägers 12b ist jeweils eine Katzschiene 20 befestigt, auf der die Krankatze 13 in Katzfahrtrichtung K verfahrbar ist.

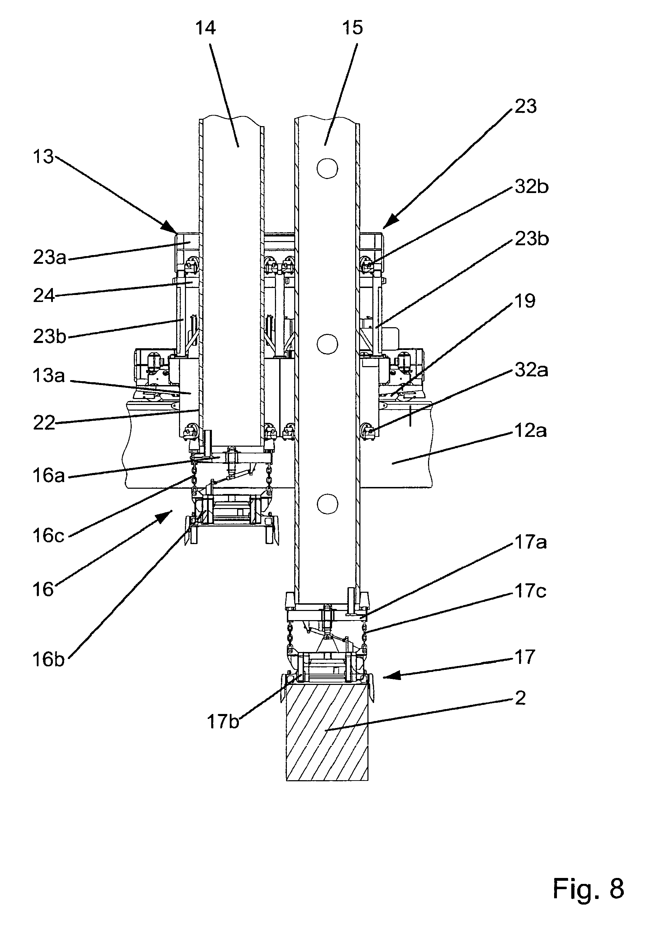

In Draufsicht gesehen besteht die Katze 13 im Wesentlichen aus einem rechteckigen Grundrahmen 13a, in dessen vier Ecken Katzfahrwerke 21 angeordnet sind, die auf den Katzschienen 20 verfahren. In dem Grundrahmen 13a der Krankatze 13 befinden sich im mittleren Bereich zwei Öffnungen, durch die der erste Mast 14 und der zweite Mast 15 hindurch geführt sind. Der erste Mast 14 und der zweite Mast 15 sind jeweils über untere Führungselemente 32a in den Grundrahmen 13a geführt (siehe Figur 8). Zusätzlich ist auf dem Grundrahmen 13 eine tischartige Tragstruktur 23 aufgestellt, die in der Draufsicht gesehen rechteckig ist und einen Oberrahmen 21 a aufweist, der über sechs Beine 23b auf der Oberseite des Grundrahmens 13 abgestützt ist. Im Bereich des Oberrahmens 21 a der Tragstruktur 23 befinden sich obere Führungselemente 32b für den ersten Mast 14 und den zweiten Mast 15 (siehe Figur 8).

Um den ersten Mast 14 und den zweiten Mast 15 in Hub- und Senkrichtung H zu bewegen, sind auf dem Grundrahmen 13a der Krankatze 13 ein erstes Hubwerk 25 für den ersten Mast 14 und ein zweites Hubwerk 26 für den zweiten Mast 15 angeordnet. Entsprechender Weise können der erste und zweite Mast 14, 15 unabhängig voneinander in Hub- und Senkrichtung H bewegt werden. In der Figur 3 ist der erste Mast 14 in seiner angehobenen Stellung gezeigt. Demgegenüber befindet sich der zweite Mast 15 in einer mittleren Stellung. Hierbei sind das erste Hubwerk 25 und das zweite Hubwerk 26 auf gegenüberliegenden Seiten des Grundrahmens 13a angeordnet. Das erste Hubwerk 25 und auch das zweite Hubwerk 26 weisen jeweils eine erste Seiltrommel 25a, 26a und eine zweite Seiltrommel 25b, 26b auf, die koaxial zueinander und an einem gemeinsamen ersten Getriebe 25c beziehungsweise zweiten Getriebe 26c gelagert sind, die jeweils von einem ersten Antriebsmotor 25d beziehungsweise zweiten Antriebsmotor 26d angetrieben werden. Von jeder der vier Seiltrommeln 25a, 25b, 26a und 26b laufen jeweils zwei erste Seile 27 beziehungsweise zwei zweite Seile 28 ab, so dass je Hubwerk 25, 26 vier Seile 27, 28 vorhanden sind, die entweder direkt von der Seiltrommel 25a, 25b, 26a, 26b vertikal nach unten ablaufen bzw. horizontal auf die gegenüberliegende Seite des ersten Mastes 14 beziehungsweise zweiten Mastes 15 geführt werden und dort über eine Umlenkrolle 29 mit einer horizontalen Drehachse um 90° vertikal nach unten umgelenkt werden. Die Enden der ersten Seile 27 sind mit dem ersten Lastaufnahmemittel 16 beziehungsweise die Enden der zweiten Seile 28 mit dem zweiten Lastaufnahmemittel 17 verbunden.

Ferner ist aus der Figur 3 ersichtlich, dass an der Außenseite der linken vertikalen Stützen 18l ein containerartiger Behälter 30 befestigt ist, in dem die Steuerung und Leistungselektrik bzw. -elektronik für den Brücken- oder Portalkran 9 angeordnet ist.

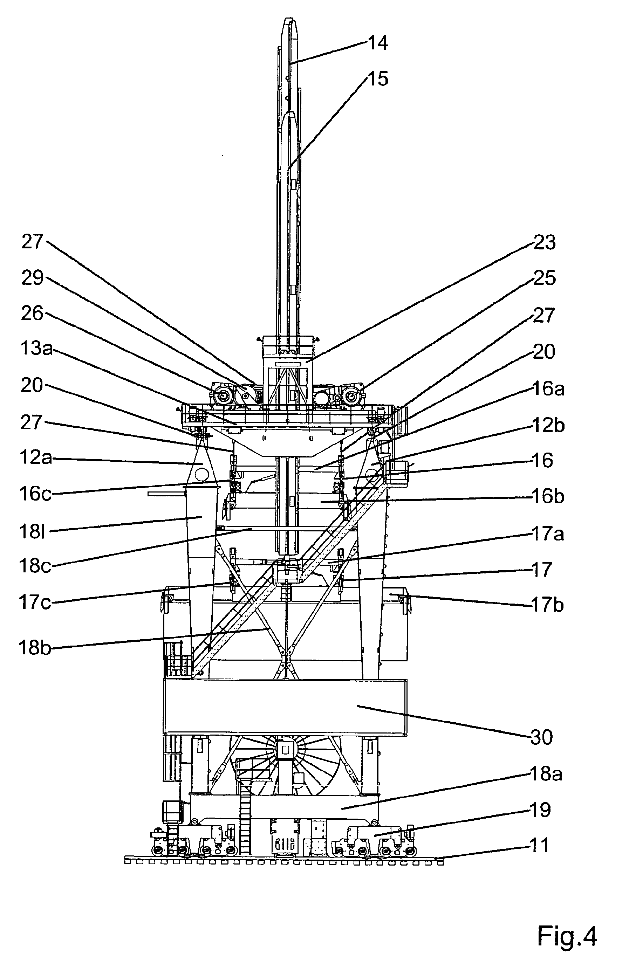

Die Figur 4 zeigt eine Seitenansicht von Figur 3 und lässt besonders gut die kardanische Befestigung des ersten Lastaufnahmemittels 16 an dem unteren Ende 14a des ersten Mastes 14 und des zweiten Lastaufnahmemittels 17 an dem unteren Ende 15a des zweiten Mastes 15 erkennen. Das erste Lastaufnahmemittel 16 und das zweite Lastaufnahmemittel 17 sind in üblicher Weise in einen oberen ersten Aufhängerahmen 16a und einen oberen zweiten Aufhängerahmen 17a und dem eigentlichen ersten Spreaderrahmen 16a beziehungsweise zweiten Spreaderrahmen 17a aufgeteilt. Der erste Aufhängerahmen 16a und der zweite Aufhängerahmen 17a sind jeweils zentral an dem unteren Ende 14a des ersten Mastes 14 beziehungsweise dem unteren Ende 15a des zweiten Mastes 15 kardanisch befestigt und weisen in der Draufsicht gesehen einen im Wesentlichen rechteckigen Querschnitt auf. In den jeweiligen Ecken des ersten Aufhängerahmens 16a beziehungsweise des zweiten Aufhängerahmens 17a sind die vier ersten Seile 27 bzw. die vier zweiten Seile 28 angeschlagen. Aus Gründen der Übersichtlichkeit sind die zweiten Seile 28 weggelassen.

Die Figur 4 zeigt deutlich, dass das erste Lastaufnahmemittel 16 sich in seiner maximal angehobenen und in Bezug auf die Länge der Container 2 eingefahrenen Stellung oberhalb des oberen Spannelementes 18c zwischen den beiden linken vertikalen Stützen 181 befindet, so dass die Krankatze 13 mit dem Lastaufnahmemittel 16 beziehungsweise dessen Spreaderrahmen 16b und ohne hiervon geförderten Container 2 das obere Spannelement 18c überfahren kann.

Ferner ist aus der Figur 4 ersichtlich, dass das von der ersten Seiltrommel 25a oben und horizontal in Richtung des ersten Mastes 14 ablaufende erste Seil 27 in Richtung einer auf der gegenüberliegenden Seite des Grundrahmens 13a gelagerten Umlenkrolle 29 geführt wird und von dieser aus seiner horizontalen Ausrichtung vertikal um 90° nach unten umgelenkt wird. Entsprechend werden auch die anderen ersten Seile 27 und die zweiten Seile 28 umgelenkt, so dass auf dem Grundrahmen 13a insgesamt vier Umlenkrollen 29 angeordnet sind.

Üblicherweise ist der erste Spreaderrahmen 16b beziehungsweise der zweite Spreaderrahmen 17b über erste Ketten 16c beziehungsweise zweite Ketten 17c an dem ersten Aufhängerahmen 16a beziehungsweise an dem zweiten Aufhängerahmen 17b aufgehängt.

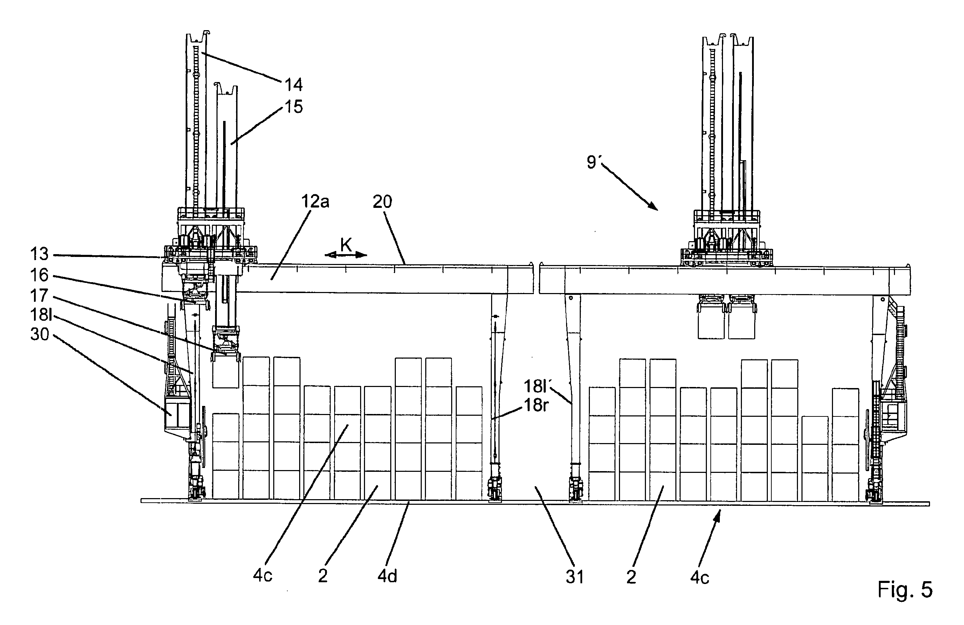

In der Figur 5 ist eine Vorderansicht von Figur 3 mit einem weiteren benachbarten Brücken- oder Portalkran 9' dargestellt. In dieser Ansicht ist der Containerlagerbereich 4c mit den aufeinander gestapelten Containern 2 klar zu erkennen. In dem Containerlagerbereich 4c sind jeweils fünf Container übereinander gestapelt und in Katzfahrtrichtung K gesehen nebeneinander und mit einem Abstand von etwa 40 cm zueinander abgestellt. Entsprechenderweise sind der erste Mast 14 und der zweite Mast 15 an der Krankatze 13 in Katzfahrtrichtung K derart voneinander beabstandet, dass das erste Lastaufnahmemittel 16 und das zweite Lastaufnahmemittel 17, insbesondere deren erster Spreaderrahmen 16b und deren zweiter Spreaderrahmen 16c, in Katzfahrtrichtung K gesehen derart voneinander beabstandet sind, dass von dem ersten Lastaufnahmemittel 16 und dem zweiten Lastaufnahmemittel 17 synchron oder zeitlich versetzt jedoch zumindest zeitweise gleichzeitig, Container 2 aus dem Containerlagerbereich 4c aufgenommen beziehungsweise dort abgestellt werden können.

In Bezug auf die in Katzfahrtrichtung K gesehen erste und letzte Reihe der Container 2 ist vorgesehen, dass diese von dem ersten Lastaufnahmemittel 16 und auch dem zweiten Lastaufnahmemittel 17 erreicht werden können, so dass jeder Container 2 von dem ersten Lastaufnahmemittel 16 oder dem zweiten Lastaufnahmemittel 17 an jeden Ort des Containerlagerbereiches 4c abgestellt oder von diesem aufgenommen werden kann. Hierfür sind der erste Träger 12a und der zweite Träger 12b seitlich über die linke vertikale Stütze 18l beziehungsweise die rechte vertikale Stütze 18r so weit verlängert worden, dass in Bezug auf die rechte vertikale Stütze 18r gesehen ein angehobenes zweites Lastaufnahmemittel 17 seitlich aus dem Containerlagerbereich 4d hinausfahren kann, so dass das erste Lastaufnahmemittel 16 auch in der letzten Reihe der Container einen Container 2 aufnehmen beziehungsweise abstellen kann sowie das erste Lastaufnahmemittel 16 in der ersten Reihe. Eine entsprechende Situation ist in der Figur 5 bei der linken Katze 13 dargestellt.

Denkbar wäre auch, den ersten Träger 12a und den zweiten Träger 12b mit den zugehörigen Schienen 20 nur auf der linken Seite zu verlängern, an der der Behälter 30 seitlich neben der linken vertikalen Stütze 18l angeordnet ist. Eine entsprechende Verlängerung auf dieser Seite würde nicht zu einer Erhöhung der Baugröße des Brücken- oder Portalkrans 9 führen. Wird eine derartige Verlängerung auf der rechten Seite in Bezug auf die rechte vertikale Stütze 18r vorgenommen und eine entsprechende Verlängerung auch auf einem weiteren parallel angeordneten Brücken- oder Portalkran 9', so entsteht zwischen diesen vertikalen Stützen 18r, 18l' ein Bereich, der nicht für die Lagerung von Containern 2 benutzt werden kann, sondern beispielsweise als Fahrweg 31.

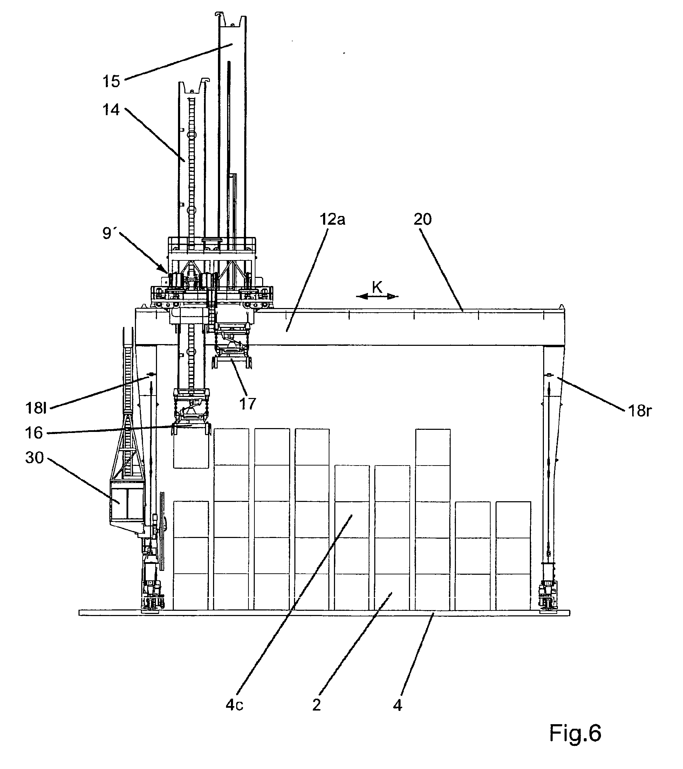

Die Figur 6 zeigt eine Vorderansicht von Figur 3 mit einem Brücken- oder Portalkran 9 mit einer alternativen Länge des Kranträgers 12. Wie zuvor ausgeführt, ist es auch möglich, den ersten Träger 12a und den zweiten Träger 12b im Bereich der seitlichen linken vertikalen Stütze 18l beziehungsweise rechten vertikalen Stütze 18r enden zu lassen. Dies hat zur Folge, dass die in Katzfahrtrichtung K gesehen erste und letzte Reihe von gestapelten Containern 2 im Lagerbereich 4c nur von dem in Katzfahrtrichtung K gesehen vorderen ersten Mast 14 mit dem ersten Lastaufnahmemittel 16 in Bezug auf die erste Reihe von Containern 2 bedient werden kann und in Bezug auf die letzte Reihe von Containern 2 nur mit dem in Katzfahrtrichtung K gesehen hinteren zweiten Mast 15 mit dem zweiten Lastaufnahmemittel 16.

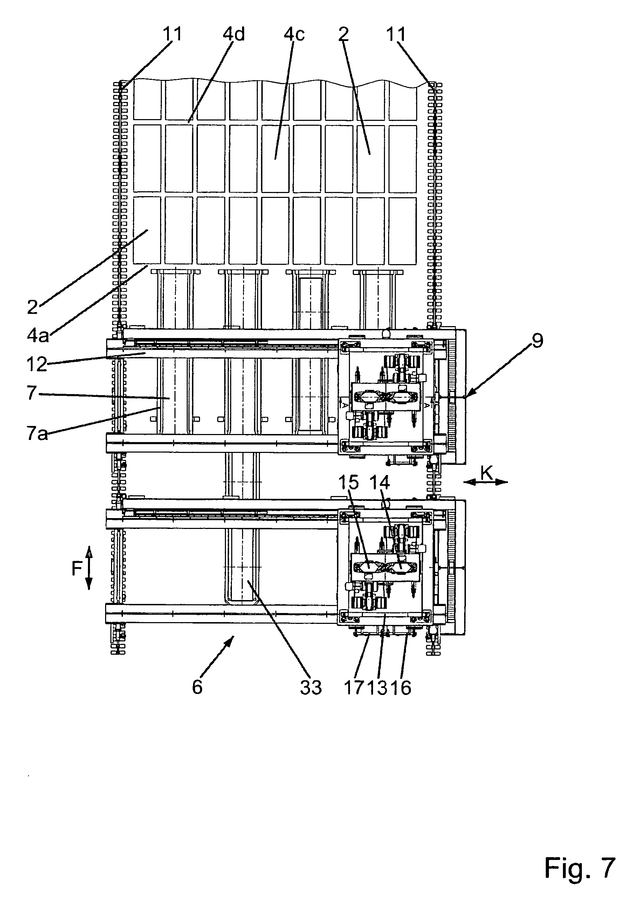

Die Figur 7 zeigt eine Ausschnittsvergrößerung von Figur 1 aus dem Bereich eines Be- und Entladebereichs 6 eines Containerlagers 4 der Umschlaganlage 1 gemäß Figur 1. Aus dieser Figur ist zu erkennen, dass in dem Ein- und Auslagerungsbereich 10 mehrere Stellplätze 7 für fahrerlose Transportfahrzeuge 33 nebeneinander und mit möglichst geringem Abstand zueinander angeordnet sind. Hierbei weist der Lagerbereich 4c neun nebeneinander abgestellte Reihen von Containern 2 auf, wobei diesem vier Stellplätze 7 für von fahrerlosen Transportfahrzeugen 33 abgestellten oder aufgenommenen Containern vorgesehen sind. Die Stellplätze 7 für die Container 2 bestehen im Wesentlichen aus stationären Traggestellen 7a, auf die die Container 2 von dem Brücken- oder Portalkran 9 bzw. dem fahrerlosen Transportfahrzeug 33 abgestellt oder aufgenommen werden können. Hierfür sind die Traggestelle 7a in Ein-und Ausfahrtrichtung der fahrerlose Transportfahrzeuge 33 gesehen mit seitlich nach innen auskragenden Abstellflächen versehen, auf die ein von dem fahrerlosen Transportfahrzeug 33 angehobener Container 2 abgestellt oder von diesem aufgenommen werden kann.

Außerdem zeigt die Figur 8 eine Schnittansicht eines Brücken- oder Portalkrans 9 gemäß Figur 5 aus dem Bereich der Krankatze 13. Aus dieser Schnittansicht ist insbesondere ersichtlich, dass der erste Mast 14 und der zweite Mast 15 jeweils über untere Führungselemente 32a im Bereich des Grundrahmens 13a der Krankatze 13 sowie über obere Führungselemente 32b im Bereich des Oberrahmens 23a der Tragstruktur 23 geführt sind. Die unteren und oberen Führungselemente 32a und 32b sind als Führungsrollen ausgebildet, die den ersten Mast 14 und den zweiten Mast 15 jeweils von vier Seiten her sowie gegenüberliegend führen.

Die Beschreibung bezieht sich auf einen Brücken- oder Portalkran 9, 9', der als Portalkran ausgebildet ist. Grundsätzlich ist es auch möglich den Brücken- oder Portalkran 9, 9' als Brückenkran mit hochgelegten beziehungsweise aufgeständerten Schienen 11 auszubilden.

### Bezugszeichenliste

- 1: Umschlaganlage
- 2: Container
- 3: landseitiger Umschlagbereich
- 4: Containerlager
- 4a: landseitiges Ende
- 4b: seeseitiges Ende
- 4c: Containerlagerbereich
- 4d: Abstellbereich
- 5: seeseitiger Umschlagbereich
- 6: Be- und Entladebereich
- 7: Stellplatz
- 7a: Traggestell
- 8: Lastkraftwagen
- 9, 9': Brücken- oder Portalkran
- 10: Ein- und Auslagerungsbereich
- 11: Schienen
- 12: Kranträger
- 12a: erster Träger
- 12b: zweiter Träger
- 12c: Spitze
- 13: Krankatze
- 13a: Grundrahmen
- 14: erster Mast
- 14a: unteres Ende des ersten Mastes
- 15: zweiter Mast
- 15a: unteres Ende des zweiten Mastes
- 16: erstes Lastaufnahmemittel
- 16a: erster Aufhängerahmen
- 16b: erster Spreaderrahmen
- 16c: erste Kette
- 17: zweites Lastaufnahmemittel
- 17a: zweiter Aufhängerahmen
- 17b: zweiter Spreaderrahmen
- 17c: zweite Kette
- 18a: Grundträger
- 18b: Hauptspannelement
- 18c: oberes Spannelement
- 18l,18l': linke vertikale Stütze
- 18r: rechte vertikale Stütze
- 19: Kranfahrwerke
- 20: Katzschiene
- 21: Katzfahrwerke
- 22: untere Öffnungen
- 23: Tragstruktur
- 23a: Oberrahmen
- 23b: Beine
- 24: obere Öffnungen
- 25: erstes Hubwerk
- 25a: erste Seiltrommel
- 25b: zweite Seiltrommel
- 25c: erstes Getriebe
- 25d: erster Antriebsmotor
- 26: zweites Hubwerk
- 26a: erste Seiltrommel
- 26b: zweite Seiltrommel
- 26c: zweites Getriebe
- 26d: zweiter Antriebsmotor
- 27: erste Seile
- 28: zweite Seile
- 29: Umlenkrolle
- 30: Behälter
- 31: Fahrweg
- 32a: untere Führungselemente
- 32b: obere Führungselemente
- 33: fahrerloses Transportfahrzeug
- F: Kranfahrtrichtung
- H: Hub- und Senkrichtung
- K: Katzfahrtrichtung

## Patentansprüche

1. Brücken- oder Portalkran, insbesondere zum Handhaben von ISO-Containern, mit einer entlang eines Kranträgers in Katzfahrtrichtung bewegbaren Krankatze, die mindestens einen Mast trägt, der in einer vertikalen Hub- und Senkrichtung bewegbar ist und an dem ein Lastaufnahmemittel für Container aufgehängt ist, **dadurch gekennzeichnet, dass** die Krankatze (13) einen ersten Mast (14) mit einem ersten Lastaufnahmemittel (16) und mindestens einen zweiten Mast (15) mit einem zweiten Lastaufnahmemittel (17) trägt und in Katzfahrtrichtung (K) gesehen mit Abstand und hinter dem ersten Mast (14) der mindestens eine zweite Mast (15) angeordnet ist.

2. Brücken- oder Portalkran nach Anspruch 1, **dadurch gekennzeichnet, dass** der erste Mast (14) und der mindestens eine zweite Mast (15) derart voneinander beabstandet sind, dass von dem an dem ersten Mast (14) angeordneten ersten Lastaufnahmemittel (16) und von dem an dem mindestens einem zweiten Mast (15) angeordneten zweiten Lastaufnahmemittel (17) in Bezug auf die Bewegung in Hub-und Senkrichtung (H) unabhängig voneinander jeweils Container (2) handhabbar sind.

3. Brücken- oder Portalkran nach Anspruch 1 oder 2, **dadurch gekennzeichnet, dass** der erste Mast (14) über ein erstes Hubwerk (25) und der mindestens zweite Mast (15) über ein zweites Hubwerk (25) heb- und senkbar sind.

4. Brücken- oder Portalkran nach einem der Ansprüche 1 bis 3, **dadurch gekennzeichnet, dass** der erste Mast (14) und der zweite Mast (15) über erste obere und untere Führungselemente beziehungsweise über zweite obere und untere Führungselemente an der Krankatze (13) geführt sind.

5. Brücken- oder Portalkran nach einem der Ansprüche 1 bis 4, **dadurch gekennzeichnet, dass** der Kranträger (12) aus einem ersten Träger (12a) und einem zweiten Träger (12b) besteht, an denen Katzschienen (20) angeordnet sind, auf denen die Krankatze (13) in Katzfahrtrichtung (K) verfahrbar ist und der erste Träger (12a) und der zweite Träger (12b) in der rechtwinklig zu der Katzfahrtrichtung (K) verlaufenden Kranfahrtrichtung (F) voneinander beabstandet ist.

6. Brücken- oder Portalkran nach einem der Ansprüche 1 bis 5, **dadurch gekennzeichnet, dass** an der Krankatze (13) ein erster Mast (14) und ein zweiter Mast (15) angeordnet sind.

7. Brücken- oder Portalkran nach einem der Ansprüche 1 bis 6, **dadurch gekennzeichnet, dass** der erste Mast (14) und der zweite Mast (15) jeweils einteilig und starr ausgebildet sind.

## Claims

1. Bridge crane or gantry crane, particularly for handling ISO containers, having a crane trolley which is able to be moved along a crane girder in the direction of travel of the trolley and which carries at least one mast which can be moved in a vertical raising and lowering direction and from which is suspended a load picking-up means for containers, **characterised in that** the crane trolley (13) carries a first mast (14) having a first load picking-up means (16) and at least one second mast (15) having a second load picking-up means (17) and, looking in the direction of travel (K) of the trolley, the at least one second mast (15) is arranged behind and at a distance from the first mast (14).

2. Bridge crane or gantry crane according to claim 1, **characterised in that** the first mast (14) and the at least one second mast (15) are spaced away from one another in such a way that, with regard to movement in the raising and lowering direction (H), respective containers (2) can be handled independently of one another by the first load picking-up means (16) arranged on the first mast (14) and by the second load picking-up means (17) arranged on the at least one second mast (15).

3. Bridge crane or gantry crane according to claim 1 or 2, **characterised in that** the first mast (14) can be raised and lowered by means of a first lifting mechanism (25) and the at least one second mast (15) can be raised and lowered by means of a second lifting mechanism (25).

4. Bridge crane or gantry crane according to one of claims 1 to 3, **characterised in that** the first mast (14) and the second mast (15) are guided on the crane trolley (13) by means of, respectively, first upper and lower guiding members and second upper and lower guiding members.

5. Bridge crane or gantry crane according to one of claims 1 to 4, **characterised in that** the crane girder (12) comprises a first girder (12a) and a second girder (12b) on which are arranged trolley rails (20) on which the crane trolley (13) can be moved in the direction of travel (K) of the trolley, and the first girder (12a) and second girder (12b) are spaced away from one another in the direction of travel (F) of the crane, which is at right angles to the direction of travel (K) of the trolley.

6. Bridge crane or gantry crane according to one of claims 1 to 5, **characterised in that** a first mast (14) and a second mast (15) are arranged on the crane trolley (13).

7. Bridge crane or gantry crane according to one of claims 1 to 6, **characterised in that** the first mast (14) and the second mast (15) are each of a one-piece and rigid form.

## Revendications

1. Pont portique ou pont roulant, notamment pour la manipulation de conteneurs ISO, ledit pont comportant un chariot roulant qui est déplaçable le long d'une poutre de grue dans une direction de déplacement de chariot et qui supporte au moins un mât qui est déplaçable dans une direction verticale de levage et d'abaissement et sur lequel est suspendu un moyen de réception de charge pour conteneur, **caractérisé en ce que** le chariot roulant (13) supporte un premier mât (14) comportant un premier moyen de réception de charge (16) et au moins un deuxième mât (15) comportant un deuxième moyen de réception de charge (17) et l'au moins un deuxième mât (15) est disposé à distance et en arrière du premier mât (14) par référence à la direction de déplacement de chariot (K).

2. Pont portique ou pont roulant selon la revendication 1, **caractérisé en ce que** le premier mât (14) et l'au moins un deuxième mât (15) sont placés à distance l'un de l'autre de telle sorte que des conteneurs (2) peuvent être manipulés à chaque fois indépendamment l'un de l'autre, par référence au déplacement dans la direction de levage et d'abaissement (H), par le moyen de réception de charge (16) disposé au niveau du premier mât (14) et par le deuxième moyen de réception de charge (17) disposé au niveau de l'au moins un deuxième mât (15).

3. Pont portique ou pont roulant selon la revendication 1 ou 2, **caractérisé en ce que** le premier mât (14) peut être levé et abaissé par un premier treuil de levage (25) et l'au moins un deuxième mât (15) peut être levé et abaissé par un deuxième treuil de levage (25).

4. Pont portique ou pont roulant selon l'une des revendications 1 à 3, **caractérisé en ce que** le premier mât (14) et le deuxième mât (15) sont guidés au niveau du chariot roulant (13) par des premiers éléments de guidage supérieur et inférieur, respectivement par des deuxièmes éléments de guidage supérieur et inférieur.

5. Pont portique ou pont roulant selon l'une des revendications 1 à 4, **caractérisé en ce que** la poutre de grue (12) est constituée d'une première poutre (12a) et d'une seconde poutre (12b) au niveau desquelles sont disposés des rails de chariot (20) sur lesquels le chariot roulant (13) est déplaçable dans une direction de déplacement de chariot (K) et la première poutre (12a) et la seconde poutre (12b) sont placées à distance l'une de l'autre dans la direction de déplacement de grue (F) s'étendant perpendiculairement à la direction de déplacement de chariot (K).

6. Pont portique ou pont roulant selon l'une des revendications 1 à 5, **caractérisé en ce qu'**un premier mât (14) et un deuxième mât (15) sont disposés au niveau du chariot roulant (13).

7. Pont portique ou pont roulant selon l'une des revendications 1 à 6, **caractérisé en ce que** le premier mât (14) et le deuxième mât (15) ont chacun une conformation rigide et monobloc.
